# FASCICULE DE BREVET EUROPEEN

(11) **EP 1 739 984 B1**
(45) Date de publication et mention de la délivrance du brevet: **06.10.2010**
(21) Numéro de dépôt: 06291047.6
(22) Date de dépôt: 26.06.2006
(51) Int. Cl.: H04W 84/00, H04B 7/185

(54) **Système de télécommunications entre un véhicule et un réseau terrestre**
Telekommunikationssystem zwischen einem Fahrzeug und einem irdischen Netzwerk
Telecommunication system between a vehicle and a ground based network

(30) Priorité: 27.06.2005 FR 0506502
(43) Date de publication de la demande: 03.01.2007
(73) Titulaire: DAOUDAL, Jean-Pierre, 78320 Le Mesnil Saint Nom (FR)
(72) Inventeur: DAOUDAL, Jean-Pierre, 78320 Le Mesnil Saint Nom (FR)
(74) Mandataire: Le Forestier, Eric

(56) Documents cités:
- EP-A- 0 987 840
- WO-A-97/11536
- US-A- 6 041 216
- US-A1- 2003 224 796

## Description

La présente invention concerne d'une façon générale les télécommunications entre réseaux terrestres et véhicules, principalement les trains.

Elle vise notamment l'équipement de trains de grande ligne permettant d'offrir aux passagers un service de communications voix + données (« bureau mobile » selon l'appellation commerciale des acteurs du marché), ou voix seulement ou données seulement, qui soit de qualité.

De façon connue en soi, des passagers des trains de type TGV en France bénéficient d'un service voix (GSM) et données (GPRS) grâce aux réseaux dédiés installés par les opérateurs le long des voies.

On envisage également aujourd'hui d'équiper ces voies de réseaux de troisième génération (UMTS) permettant d'augmenter le débit jusqu'à une valeur aujourd'hui de 384 Kbps. Par ailleurs, des expériences sont en cours en France et dans d'autres pays pour offrir un accès Internet par technologie sans fil de type « WiFi »®.

Actuellement, la qualité des communications GSM voix et/ou données dans les trains de ligne est mauvaise, ce qui est dû en premier lieu à l'existence de nombreuses zones d'ombre (zones encaissées, tunnels, etc.) liées souvent à une densité insuffisante du réseau, et en second lieu, particulièrement pour les trains à grande vitesse, par la nécessité de passer à des cadences très rapides d'une cellule à l'autre du réseau (basculement ou « hand-over » en terminologie anglo-saxonne), et ce pour un grand nombre de terminaux en cours d'utilisation dans le train.

Toutefois, la densification du réseau impliquerait de très lourds investissements pour un rendement très faible, le réseau n'étant utilisé que pendant le passage des trains, soit une toute petite fraction du temps.

Concernant les communications de type données (notamment accès Internet via GPRS), les problèmes sont similaires, avec des coupures liées aux zones d'ombres ou basculements défectueux.

Par ailleurs, si l'on souhaitait réaliser une couverture des voies de chemin de fer avec un réseau (UMTS) autorisant des débits de données plus élevés, l'investissement serait considérable, pour un retour sur investissement incertain. En effet, le souci d'une bonne qualité nécessiterait la construction d'un grand nombre de sites, à la fois peu utilisés en termes de temps mais en même temps devant être dimensionnés pour accepter un trafic de pointe couvrent l'ensemble des communications à assurer pendant le croisement de deux trains, et pour assurer des basculements convenables pour toutes ces communications.

Une communication satellitaire est également connue pour offrir des communications de type Internet sans fil aux passagers d'un train, en assurant une communication descendante entre un satellite et une borne centrale d'un réseau sans fil de type « WiFi » équipant le train en association avec une antenne qui assure la poursuite du satellite. Pour les communications en sens montant, on utilise l'accès GPRS offert par les opérateurs GSM qui sont accessibles aux passagers du train.

Cette solution est toutefois incapable d'assurer par les mêmes moyens le maintien de la communication sous un tunnel ou dans toute autre zone d'ombre (par exemple un environnement géographique très encaissé où le satellite ne peut être en vue directe de l'antenne de poursuite du train).

On trouve un autre exemple dans le document XP 008 088 488 "Radio link design for satellite based services in the fast train environment" 21-03-2000.

La présente invention vise à pallier ces limitations de l'état de la technique, et à proposer des moyens de télécommunication entre un réseau intérieur d'un véhicule susceptible de se déplacer selon un trajet possédant des zones d'ombre vis-à-vis d'une liaison satellitaire, et grâce auxquelles une communication puisse être préservée même dans ces zones d'ombre.

A cet effet, l'invention propose un système de télécommunications pour assurer les communications entre un véhicule et un réseau terrestre, le système comprenant une liaison satellitaire primaire entre un réseau terrestre tel qu'un réseau numérique cellulaire et un réseau intérieur du véhicule, système caractérisé en ce qu'il comprend en outre une liaison de communication non satellitaire entre l'étendue d'au moins une zone d'ombre du trajet du véhicule et une antenne fixe appartenant à une liaison satellitaire secondaire avec le réseau terrestre, des moyens de détection du passage du véhicule d'une zone dégagée, où la liaison satellitaire est opérationnelle, à une zone d'ombre, et des moyens de commutation entre la liaison satellitaire primaire et la liaison satellitaire secondaire combinée à la liaison non satellitaire, répondant aux moyens de détection.

Dans un premier mode de réalisation, la liaison non satellitaire est une liaison par courants porteurs sur une ligne d'alimentation électrique du véhicule ; il est avantageux dans ce cas que la liaison par courants porteurs s'étende sur une zone du trajet du véhicule plus longue que la zone d'ombre.

Dans un second mode de réalisation la liaison non satellitaire est une liaison cellulaire couvrant la zone d'ombre.

De façon préférée, les moyens de détection comprennent des moyens de détection de signaux sur la liaison satellitaire primaire ou sur la liaison non satellitaire.

D'autres aspects, buts et avantages de la présente invention apparaîtront mieux à la lecture de la description détaillée suivante des formes de réalisation préférée de celle-ci, donnée à titre d'exemple non limitatif et faite en référence aux dessins annexés, sur lesquels :
La figure 1 est une vue d'ensemble d'un système de télécommunication selon la présente invention, et
La figure 2 est une vue de détail des moyens déployés dans le train, participant à ce système.

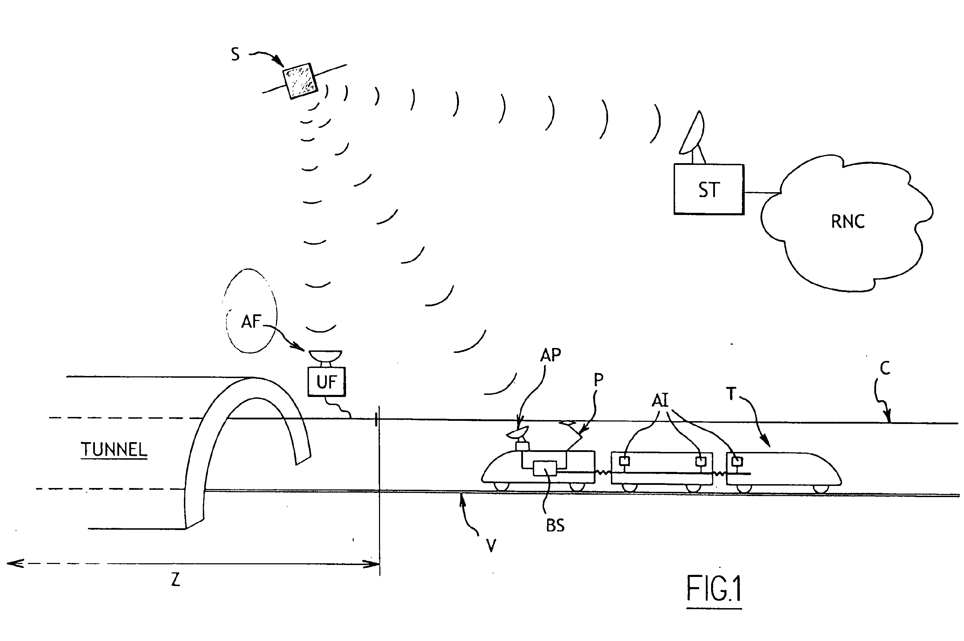

On a représenté sur la figure 1 un train de passagers T circulant sur une voie V. Ce train contient une station de base BS, par exemple de troisième génération (UMTS).

On prévoit en liaison avec cette station de base une installation (câbles, répéteurs de signaux et antennes intérieures AI) destinée à assurer la couverture UMTS de tous les espaces du train où un service de type « bureau mobile » est offert aux passagers.

La station de base BS est raccordée à son réseau numérique cellulaire terrestre RNC via une liaison satellitaire.

A cet effet, la station de base BS est apte à être en communication bidirectionnelle avec un satellite S via une interface I1 de type Iub et une antenne de poursuite AP placée par exemple sur le toit du train. Le satellite S est lui-même en communication avec une ou plusieurs stations terriennes ST reliées au réseau RNC.

Selon la présente invention, ce système de communication est complété par un ensemble de moyens permettant d'assurer une communication de la station de base BS du train avec le réseau RNC lorsque le train se trouve dans une zone non couverte par le ou les satellites (tunnel, zone encaissée, etc.).

Selon une première forme de réalisation, ces moyens comprennent une antenne fixe AF, susceptible d'être en communication bidirectionnelle avec le satellite S (ou avec un autre satellite en vue, également relié au réseau RNC), et à laquelle est reliée une unité électronique fixe UF apte à assurer la conversion bidirectionnelle entre les signaux au format d'échange avec le satellite et des signaux sur courants porteurs destinés à circuler sur une ligne d'alimentation électrique du train, ici une caténaire C.

L'antenne AF et l'unité UF sont situées par exemple au voisinage de l'une des entrées d'un tunnel et l'unité UF est reliée à une unité de couplage associé à la caténaire pour y véhiculer en superposition à l'alimentation électrique de la motrice, de façon connue en soi, les signaux après conversion et modulation (sens satellite/caténaire), ou inversement les signaux à démoduler et convertir (sens caténaire/satellite).

En variante, la modulation sur la ligne d'alimentation de la motrice peut être appliquée non pas à la caténaire, mais un rail de la voie participant à l'alimentation.

On notera ici que la caténaire C ne contient les signaux précités que sur une zone déterminée Z qui s'étend sur une longueur de voie légèrement plus grande que la zone d'ombre. Ce débord est par exemple de quelques dizaines à quelques centaines de mètres de la zone d'ombre à couvrir.

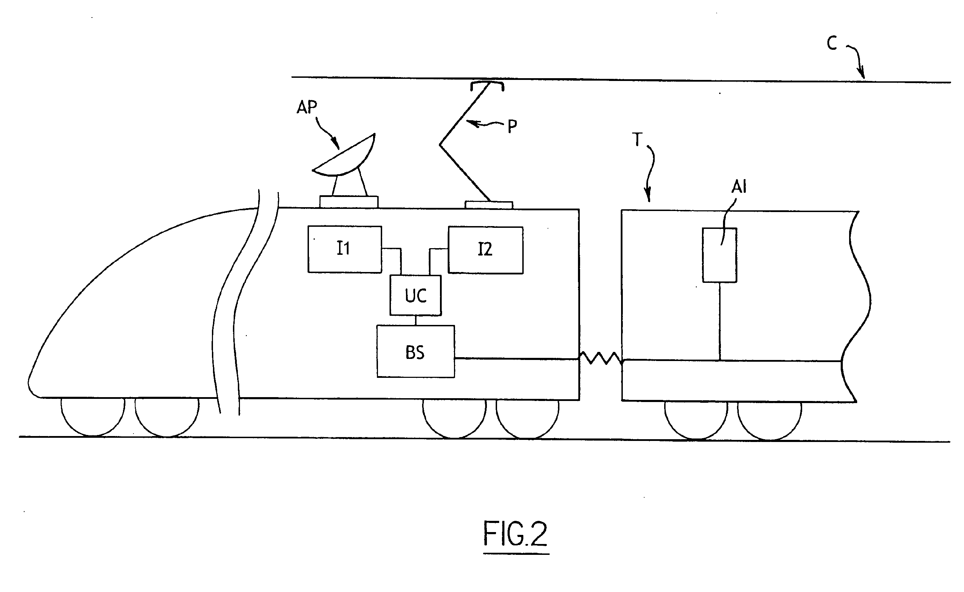

Comme illustré sur la figure 2, du côté train, un circuit d'interface I2 prélève les signaux sur la ligne de puissance amenant l'énergie de la caténaire, via le pantographe P, au moteur électrique du train.

Une unité de commutation UC est intercalée entre les interfaces I1 et I2 et la station de base BS.

Le fonctionnement de ce système est le suivant.

En zone dégagée, la station de base BS est raccordée à la station terrienne ST selon interface Iub via le circuit d'interface I1 et le satellite S. L'aptitude de l'antenne AP à viser en permanence vers le satellite permet d'assurer la permanence de ce lien.

Lors de l'approche d'un tunnel, le train entre tout d'abord dans la zone Z équipée en transmission par courants porteurs, si bien que l'unité de commutation détecte la présence de signaux véhiculés sur la caténaire.

Une commutation est alors effectuée du circuit d'interface I1 vers le circuit d'interface I2 entre l'instant auquel cette commutation est détectée et au plus tard l'instant où l'antenne de poursuite cesse d'être en communication avec le satellite S (typiquement lors de l'entrée en tunnel).

Les communications entre le réseau terrestre RNC et le réseau intérieur du train sont alors assurées via l'antenne fixe AF, Le circuit UF, la caténaire C, le pantographe P, l'interface I2 et la station de base BS, la commutation pouvant s'effectuer sans coupure.

Lorsque le train ressort de la zone d'ombre, des signaux apparaissent à nouveau au niveau de l'interface I1 reliée à l'antenne de poursuite AP, si bien que la commutation inverse est effectuée, de préférence avant que le pantographe du train ne sorte de la zone Z.

En variante, la communication entre le réseau RNC et le réseau intérieur du train peut être assuré, dans la zone d'ombre, par un réseau cellulaire dense en liaison avec l'antenne fixe AF, ce réseau dense comportant une série d'antennes réparties le long du tunnel selon un pas choisi pour assurer la continuité de la communication avec la station de base.

Bien entendu, la présente invention n'est nullement limitée aux modes de réalisation décrits ci-dessus, mais l'homme du métier saura y apporter de nombreuses variantes et modifications.

En particulier, l'homme du métier saura combiner la présente invention avec les systèmes de gestion territoriale permettant d'effectuer la commutation entre réseaux au passage des frontières (« roaming ») ou de couper la communication si aucun réseau n'est disponible dans le pays d'arrivée.

En outre, elle s'applique à tous véhicules de passagers susceptibles de parcourir des trajets présentant des zones d'ombre (véhicules sur rails, véhicules routiers, véhicules fluviaux, etc.).

## Revendications

1. Système de télécommunications pour assurer les communications sans coupure entre un véhicule (T) et un réseau terrestre (RNC), le système comprenant une liaison satellitaire primaire entre un réseau terrestre tel qu'un réseau numérique cellulaire et un réseau intérieur (BS, AI) du véhicule, système **caractérisé en ce qu'**il comprend en outre une liaison de communication non satellitaire (UF, C, P, 12) entre l'étendue d'au moins une zone d'ombre du trajet du véhicule et une antenne fixe (AF) appartenant à une liaison satellitaire secondaire avec le réseau terrestre, des moyens (UC) de détection du passage du véhicule d'une zone dégagée, où la liaison satellitaire primaire est opérationnelle, à une zone d'ombre, et des moyens de commutation (UC) entre la liaison satellitaire primaire et la liaison satellitaire secondaire combinée à la liaison non satellitaire, répondant aux moyens de détection, et **en ce qu'**une zone couverte par la liaison de communication non satellitaire est plus longue que la zone d'ombre, la liaison satellitaire primaire, en sortie d'une zone d'ombre étant la même que celle de la zone dégagée précédant ladite zone d'ombre.

2. Système selon la revendication 1, **caractérisé en ce que** la liaison non satellitaire est une liaison par courants porteurs sur une ligne d'alimentation électrique (C) du véhicule.

3. Système selon la revendication 1, **caractérisé en ce que** la liaison non satellitaire est une liaison cellulaire couvrant la zone d'ombre.

4. Système selon l'une des revendications 1 à 4, **caractérisé en ce que** les moyens de détection comprennent des moyens de détection de signaux sur la liaison satellitaire primaire ou sur la liaison non satellitaire.

## Claims

1. Telecommunications system to ensure uninterrupted communications between a vehicle (T) and a land network (RNC), the system comprising a primary satellite link between a land network such as a digital cell network and an internal network (BS, A1) of the vehicle, system **characterized in that** it further comprises a non-satellite communication link (UF, C, P, 12) between the range of at least one shadow zone of the vehicle's pathway and a fixed antenna (AF) belonging to a secondary satellite link with the land network, means (UC) to detect the passing of the vehicle from a clear zone in which the primary satellite is operational to a shadow zone, and switching means (UC) between the primary satellite link and the secondary satellite link combined with the non-satellite link, responding to the detection means, and **in that** a zone covered by the non-satellite communication link is longer than the shadow zone, the primary satellite link at the exit of a shadow zone being the same as that in the clear zone preceding said shadow zone.

2. System according to claim 1, **characterized in that** the non-satellite link is a link via carrier currents on an electric supply line (C) of the vehicle.

3. System according to claim 1, **characterized in that** the non-satellite link is a cell link covering the shadow zone.

4. System according to any of claims 1 to 3 **characterized in that** the detection means comprise means to detect signals on the primary satellite link or on the non-satellite link.

## Patentansprüche

1. Telekommunikationssystem zum Absichern unterbrechungsfreier Kommunikationen zwischen einem Fahrzeug (T) und einem irdischen Netz (RNC), wobei das System eine primäre Satellitenverbindung zwischen einem irdischen Netz wie ein zelluläres digitales Netz und einem internen Netz (BS, AI) des Fahrzeugs umfasst, wobei das System **dadurch gekennzeichnet ist, dass** es weiterhin eine Kommunikationsverbindung ohne Satellit (UF, C, P, 12) zwischen der Weite mindestens eines Schattenbereichs der Strecke des Fahrzeugs und einer starren Antenne(AF), die zu einer sekundären Satellitenverbindung mit dem irdischen Netz gehört, Mittel (UC) zur Ermittlung des Passierens des Fahrzeugs von einem freien Bereich, in dem die primäre Satellitenverbindung funktioniert, in einen Schattenbereich und Kommunikationsmittel (UC) zwischen der primären Satellitenverbindung und der mit der Verbindung ohne Satellit kombinierten sekundären Satellitenverbindung, die auf Ermittlungsmittel anspricht, umfasst, und dadurch, dass ein von der Kommunikationsverbindung ohne Satellit abgedeckter Bereich länger ist als der Schattenbereich, wobei die primäre Satellitenverbindung am Ausgang eines Schattenbereichs dieselbe ist wie die des freien Bereichs vor dem Schattenbereich.

2. System nach Anspruch 1, **dadurch gekennzeichnet, dass** die Verbindung ohne Satellit eine Trägerstromverbindung über eine elektrische Versorgungsleitung (C) des Fahrzeugs ist.

3. System nach Anspruch 1, **dadurch gekennzeichnet, dass** die Verbindung ohne Satellit eine zelluläre Verbindung ist, die den Schattenbereich abdeckt.

4. System nach einem der Ansprüche 1 bis 4, **dadurch gekennzeichnet, dass** die Erfassungsmittel Signalerfassungsmittel über die primäre Satellitenverbindung oder über die Verbindung ohne Satellit umfassen.
